# EUROPEAN PATENT APPLICATION

(11) **EP 4 755 647 A1**
(43) Date of publication of application: **10.06.2026**
(21) Application number: 25220021.7
(22) Date of filing: 02.12.2025
(51) Int. Cl.: B41J 3/407, B41J 11/00, G06K 15/02

(54) **INKJET RECORDING APPARATUS**

(30) Priority: 04.12.2024 JP 2024211568
(71) Applicant: Konica Minolta, Inc., Tokyo 100-7015 (JP)
(72) Inventor: KOMADA, Naoya, Tokyo, 100-7015 (JP)
(74) Representative: Gille Hrabal Partnerschaftsgesellschaft mbB Patentanwälte

(57) **Abstract**

Provided is an inkjet recording apparatus capable of easily printing an image, which has been caused to match a three-dimensional pattern, in an image printing region. The inkjet recording apparatus includes: a conveyance section that conveys, in a conveyance direction, a medium on which a three-dimensional pattern is formed in an image printing region; an image printing section that is provided above a conveyance surface of the conveyance section and prints an image in the image printing region; a height measurement section that measures a height of the image printing region with respect to the conveyance surface; a height data generation section that generates height data of two-dimensional coordinates indicating the height of the image printing region, based on a measurement result of the height measurement section; and an image data correction section that enlarges or reduces the image data so as to cause a position of the image data of the two-dimensional coordinates for forming the image in the image printing region to match a position of the height data.

## Description

### BACKGROUND OF THE INVENTION

### 1. Field of the Invention

The present invention relates to an inkjet recording apparatus.

### 2. Description of Related Art

In a fabric that is jacquard woven or lace woven, a three-dimensional pattern can be formed by devising the way of weaving. In addition, in recent years, in inkjet recording apparatuses such as inkjet textile printers, there is an increasing demand for printing an image caused to match a three-dimensional pattern formed in an image printing region of a fabric.

In the inkjet recording apparatus described in Japanese Patent Application Laid-Open No. 2021-84359, a camera images an image printing region of a fabric (referred to as a clothing fabric in Japanese Patent Application Laid-Open No. 2021-84359) in a state where the fabric is supported on a conveyance surface of a conveyance section to generate imaging data (referred to as imaged image data in Japanese Patent Application Laid-Open No. 2021-84359). Subsequently, a control section of the inkjet recording apparatus extracts a pattern region corresponding to a three-dimensional pattern from the imaging data. Then, the control section of the inkjet recording apparatus corrects the imaging data such that the positions of image data (referred to as colored image data in Japanese Patent Application Laid-Open No. 2021-84359) for forming an image in the image printing region match the positions (shape) of the extracted pattern region.

### SUMMARY OF THE INVENTION

Incidentally, a three-dimensional pattern formed in an image printing region of a fabric is in the same color as the material of the fabric, and it is not easy to recognize the shape (positions) of the three-dimensional pattern from imaging data generated by a camera. As a result, there is a problem in that it is difficult to print an image caused to match a three-dimensional pattern in the same color as the material of a fabric. Note that, this problem occurs not only in a case where a three-dimensional pattern is formed in an image printing region of a fabric, but also in a case where a three-dimensional pattern in the same color as the material of a medium other than a fabric, such as a resin sheet, is formed in an image printing region of the medium.

Accordingly, an object of the present invention is to provide an inkjet recording apparatus capable of easily printing an image caused to match a three-dimensional pattern, which has been formed in an image printing region of a medium, in the image printing region even when the three-dimensional pattern is in the same color as the material of the medium.

In order to achieve at least one of the above-described objects, an inkjet recording apparatus reflecting one aspect of the present invention includes:
a conveyance section that conveys, in a conveyance direction, a medium on which a three-dimensional pattern is formed in an image printing region;
an image printing section that is provided above a conveyance surface of the conveyance section and prints an image in the image printing region;
a height measurement section that measures a height of the image printing region with respect to the conveyance surface;
a height data generation section that generates height data of two-dimensional coordinates indicating the height of the image printing region, based on a measurement result of the height measurement section; and
an image data correction section that enlarges or reduces the image data so as to cause a position of the image data of the two-dimensional coordinates for forming the image in the image printing region to match a position of the height data.

### BRIEF DESCRIPTION OF DRAWING

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic perspective view of an inkjet recording apparatus according to the present embodiment;
Fig. 2 is a schematic plan diagram illustrating a state in which a fabric as an example of a medium is supported on a conveyance surface of a conveyance section;
Fig. 3 is a schematic plan diagram illustrating one aspect of the periphery of a carriage including an image printing section and a height sensor;
Fig. 4 is a schematic perspective diagram illustrating how the height sensor measures the height of an image printing region of the fabric with respect to the conveyance surface of the conveyance section;
Fig. 5 is a schematic plan diagram illustrating another aspect of the periphery of the carriage including the image printing section and a plurality of the height sensors;
Fig. 6 is a schematic diagram illustrating how another height sensor measures the height of the image printing region of the fabric with respect to the conveyance surface of the conveyance section;
Fig. 7 is a control block diagram of the inkjet recording apparatus according to the present embodiment;
Fig. 8 is a schematic diagram illustrating image data of two-dimensional coordinates;
Fig. 9 is a schematic diagram illustrating feature point data of the two-dimensional coordinates;
Fig. 10 is a schematic plan diagram illustrating a measurement trajectory of the height sensor;
Fig. 11 is a schematic plan diagram illustrating another measurement trajectory of the height sensor;
Fig. 12 is a schematic plan diagram illustrating another aspect of the periphery of the carriage including the image printing section and the height sensor;
Fig. 13 is a schematic diagram illustrating height data of the two-dimensional coordinates;
Fig. 14 is a schematic diagram illustrating how the image data of the two-dimensional coordinates and the height data of the two-dimensional coordinates are superimposed and displayed on a GUI screen;
Fig. 15 is a schematic diagram illustrating how the positions of feature points of the feature point data are caused to match the positions of feature points of the height data;
Fig. 16 is a schematic perspective view of an inkjet recording apparatus according to Variation 1 of the present embodiment;
Fig. 17 is a schematic perspective view of an inkjet recording apparatus according to Variation 2 of the present embodiment; and
Fig. 18 is a schematic perspective view of an inkjet recording apparatus according to Variation 3 of the present embodiment.

### DETAILED DESCRIPTION OF EMBODIMENTS

Hereinafter, one or more embodiments of the present invention will be described with reference to the drawings. However, the scope of the invention is not limited to the disclosed embodiments.

Hereinafter, the present embodiment will be described with reference to the accompanying drawings. In the specification and the claims of the present application, the conveyance direction refers to the conveyance direction in which a medium such as a fabric is conveyed, and in the present embodiment, refers to the forward direction. In the specification and claims of the present application, the downstream side refers to the downstream side in the conveyance direction, and the upstream side refers to the upstream side in the conveyance direction. In addition, in the present embodiment, the X direction refers to the main scanning direction and the left-right direction. The Y direction refers to the sub-scanning direction and the front-rear direction. One side in the Y direction is the conveyance direction (the frontward direction).

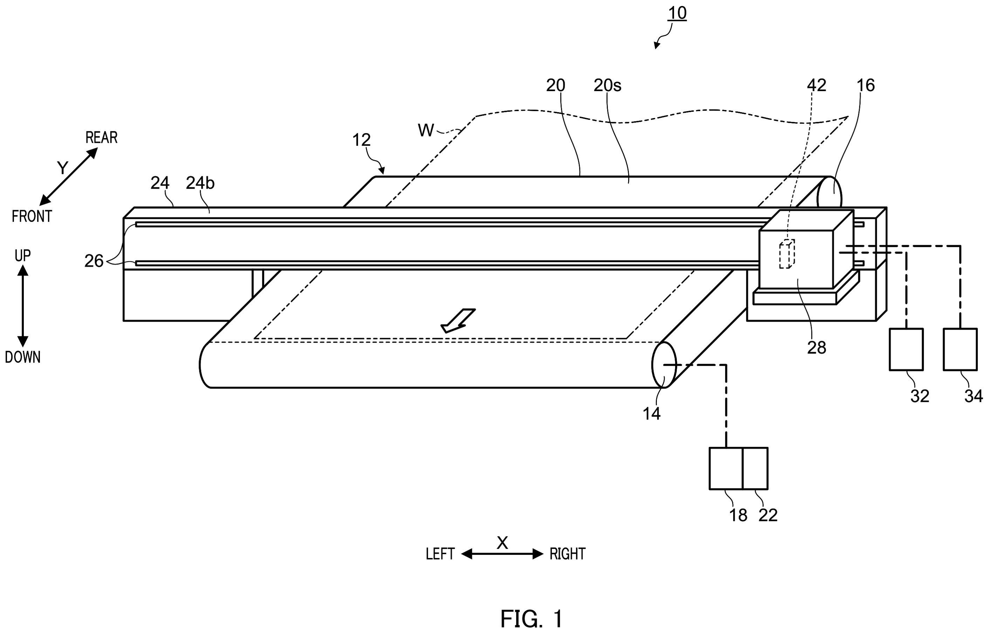

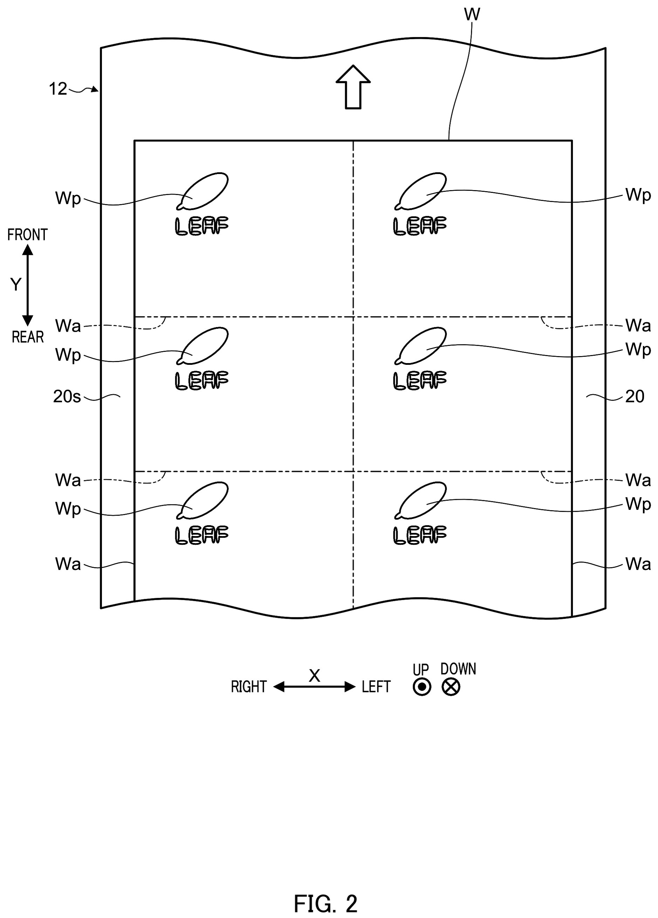

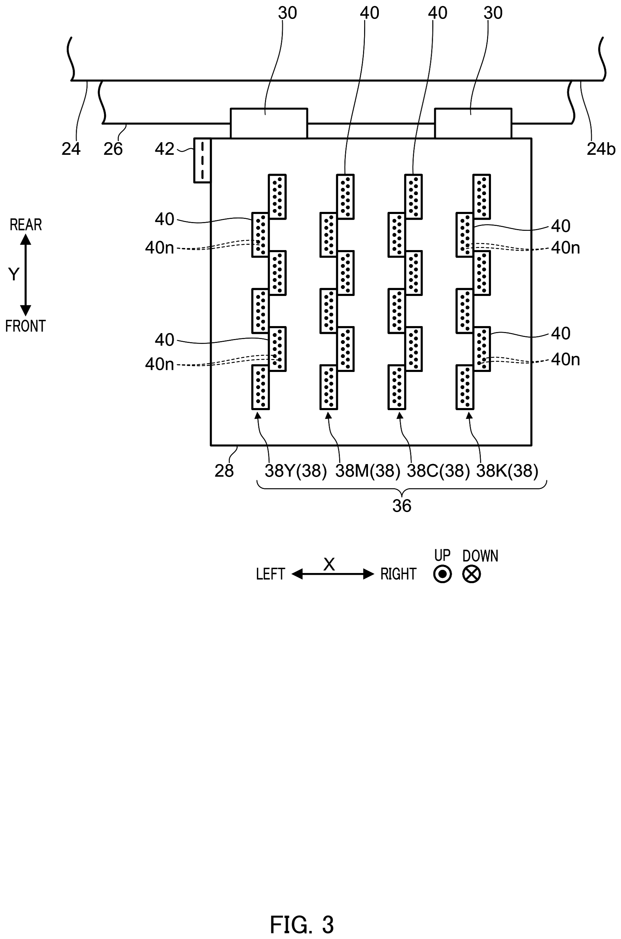

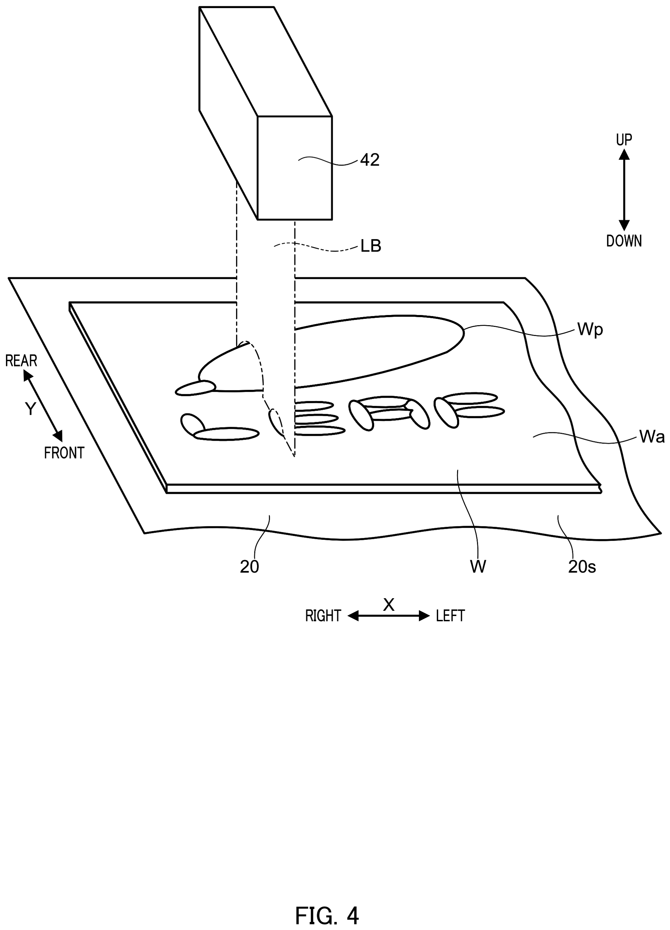

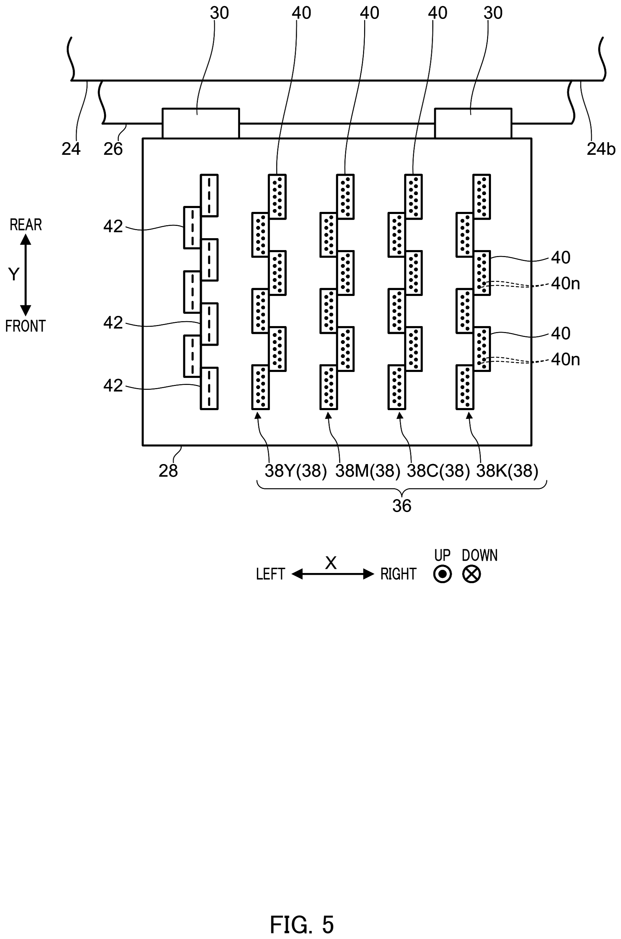

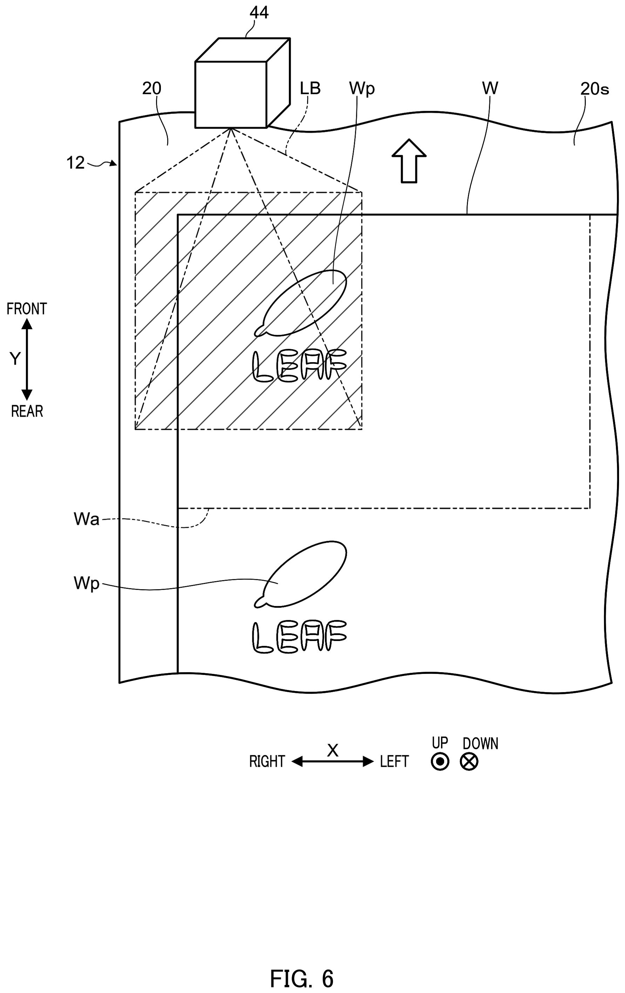

The configuration of an inkjet recording apparatus 10 according to the present embodiment will be described with reference to Figs. 1 to 6. Fig. 1 is a schematic perspective view of the inkjet recording apparatus 10 according to the present embodiment. Fig. 2 is a schematic plan diagram illustrating a state in which a fabric W as an example of a medium is supported on a conveyance surface 20s of a conveyance section 12. Fig. 3 is a schematic plan diagram illustrating one aspect of the periphery of a carriage 28 including an image printing section 36 and a height sensor 42. Fig. 4 is a schematic perspective diagram illustrating how the height sensor 42 measures the height of an image printing region Wa of the fabric W with respect to the conveyance surface 20s of the conveyance section 12. Fig. 5 is a schematic plan diagram illustrating another aspect of the periphery of the carriage 28 including the image printing section 36 and a plurality of the height sensors 42. Fig. 6 is a schematic diagram illustrating how another height sensor 44 measures the height of the image printing region Wa of the fabric W with respect to the conveyance surface 20s of the conveyance section 12.

As illustrated in Figs. 1 and 2, the inkjet recording apparatus 10 according to the present embodiment is an image printing apparatus that prints an image (color image) by discharging inks of four colors onto, for example, the fabric W as an example of a medium while conveying the fabric W in the conveyance direction. The fabric W includes a plurality of the image printing regions Wa in which the same image is printed, and the plurality of image printing regions Wa is continuously arranged in the X direction (the width direction of the fabric W) and the Y direction (the longitudinal direction of the fabric W). The fabric W is, for example, a jacquard woven textile, and in each of the image printing regions Wa of the fabric W, a three-dimensional pattern Wp is formed by devising jacquard weaving. The fabric W is fed out from a feed roll (not illustrated) to the inkjet recording apparatus 10. The fabric W on which an image has been printed is fed out from the inkjet recording apparatus 10 and is wound up around a winding roll (not illustrated).

Note that, the fabric W includes the plurality of image printing regions Wa as described above, but may include at least one image printing region Wa. The medium on which an image is to be printed is not limited to the fabric W as long as the three-dimensional pattern Wp is formed in the image printing region(s) Wa, and the medium on which an image is to be printed may be a medium other than the fabric W, such as a resin sheet.

As illustrated in Fig. 1, the inkjet recording apparatus 10 includes the conveyance section 12 that conveys the fabric W, which has been fed out from the feed roll, in the conveyance direction. The conveyance section 12 includes a pair of conveyance rollers 14 and 16 which are rotatable, and the pair of conveyance rollers 14 and 16 is separated from each other in the Y direction. The conveyance roller 14 as one of the pair is a drive roller, and a rotating shaft (not illustrated) of the conveyance roller 14 as the one of the pair is associated with and coupled to a conveyance motor 18. The conveyance roller 16 as the other one of the pair is a driven roller that rotates following the rotation of the conveyance roller 14 as the one of the pair.

The conveyance section 12 includes a conveyance belt 20 that has an endless shape and supports the fabric W, and the conveyance belt 20 is wound around the pair of conveyance rollers 14 and 16. The conveyance belt 20 extends in the Y direction, and a portion located on the upper side of the conveyance belt 20 is the conveyance surface 20s of the conveyance section 12. By rotating the pair of conveyance rollers 14 and 16 by the driving of the conveyance motor 18, the fabric W can be conveyed in the conveyance direction by circulating the conveyance belt 20.

The conveyance motor 18 includes an encoder 22 that detects the number of rotations of the conveyance motor 18, and the number of rotations of the conveyance motor 18 corresponds to the conveyance distance of the fabric W that is conveyed by the conveyance section 12. In other words, the inkjet recording apparatus 10 includes the encoder 22 as a distance detection section that detects the conveyance distance of the fabric W that is conveyed by the conveyance section 12.

The inkjet recording apparatus 10 includes a gate-shaped frame 24 that is installed so as to straddle the conveyance section 12. The gate-shaped frame 24 includes a support portion 24b extending in the X direction, and the support portion 24b is located above the conveyance surface 20s of the conveyance section 12. A pair of linear guides 26 extending in the X direction is provided at the support portion 24b of the gate-shaped frame 24, and the pair of linear guides 26 is separated from each other in the up-down direction.

As illustrated in Figs. 1 and 3, the carriage 28 is provided at the pair of linear guides 26 via a plurality of slide members 30 so as to be movable in the X direction (the main scanning direction). In other words, the carriage 28 is provided at the support portion 24b of the gate-shaped frame 24 so as to be movable in the X direction via the pair of linear guides 26 or the like. In further other words, the carriage 28 is provided above the conveyance surface 20s of the conveyance section 12 so as to be movable in the X direction via the support portion 24b of the gate-shaped frame 24 or the like. In addition, the carriage 28 moves in the X direction by the driving of a movement motor 32 such as a linear motor. An encoder 34 that detects the position of the carriage 28 in the X direction is provided at an appropriate position of the carriage 28. The conveyance distance of the fabric W detected by the encoder 22 as the distance detection section corresponds to the relative position (movement amount) of the carriage 28 in the Y direction with respect to the fabric W.

The carriage 28 is provided with the image printing section 36 that prints an image on the image printing region Wa of the fabric W. In other words, the image printing section 36 is provided above (on the side above) the conveyance surface 20s of the conveyance section 12 so as to be movable in the X direction (the main scanning direction), and the image printing section 36 moves integrally with the carriage 28 in the X direction. In addition, the image printing section 36 includes a plurality of head units 38 (38Y, 38M, 38C, and 38K) which forms an image by discharging ink onto the image printing region Wa of the fabric W. The plurality of head units 38 (38Y, 38M, 38C, and 38K) corresponds to inks of four colors of yellow (Y), magenta (M), cyan (C), and black (K). The plurality of head units 38 (38Y, 38M, 38C, and 38K) is arranged at intervals in the X direction.

Each of the head units 38 includes a plurality of inkjet heads 40 that discharges ink onto the fabric W, and the plurality of inkjet heads 40 is provided in the carriage 28. The plurality of inkjet heads 40 in each of the head units 38 is arranged in a staggered manner along the Y direction. At the leading end portion of each of the inkjet heads 40, a plurality of nozzles 40n for discharging ink is formed.

As illustrated in Figs. 1, 3, and 4, the height sensor 42 as a height measurement section that measures the height of the image printing region Wa of the fabric W with respect to the conveyance surface 20s of the conveyance section 12 is provided at a side portion of the carriage 28. In other words, the height sensor 42 is provided above (on the side above) the conveyance surface 20s of the conveyance section 12 so as to be movable in the X direction via the carriage 28 and the support portion 24b of the gate-shaped frame 24. The height sensor 42 moves integrally with the carriage 28 and the image printing section 36 in the X direction.

The height sensor 42 is disposed parallel to the Y direction, and emits a laser beam (an example of light) LB, which has a band shape and is parallel to the Y direction, to measure the height of the image printing region Wa of the fabric W by time-of-flight. The measurement range of the height sensor 42 has a line shape. The width of the laser beam LB emitted from the height sensor 42 is, for example, equal to or greater than 20 mm and equal to or less than 50 mm. The resolution of the height sensor 42 is, for example, equal to or greater than 1 µm and equal to or less than 5 µm. Note that, the method of measuring the height of the image printing region Wa of the fabric W by the height sensor 42 is not limited to the time-of-flight method.

As illustrated in Fig. 5, there may be a plurality of height sensors 42, and the plurality of height sensors 42 may be arranged in a staggered manner along the Y direction in the carriage 28. In addition, instead of providing the height sensor(s) 42 at/in the carriage 28, the height sensor 44 of an area measurement type which measures the height of the image printing region Wa of the fabric W may be provided as illustrated in Fig. 6. The height sensor 44 emits a laser beam (an example of light) LB having a rectangular shape and measures the height of the image printing region Wa of the fabric W by time-of-flight. The measurement range of the height sensor 44 has a rectangular shape. Note that, the height sensor 42 or the height sensor 44 is referred to as the height sensor 42 or the like.

Here, as illustrated in Figs. 1 and 3, the movement motor 32 such as the linear motor described above corresponds to a movement section that moves the height sensor 42 or the like (the image printing section 36) in the X direction. The encoder 34 corresponds to a position detection section that detects the position of the height sensor 42 or the like (the image printing section 36) in the X direction. The conveyance distance of the fabric W detected by the encoder 22 as the distance detection section corresponds to the relative position (movement amount) of the height sensor 42 or the like (the image printing section 36) in the Y direction with respect to the fabric W.

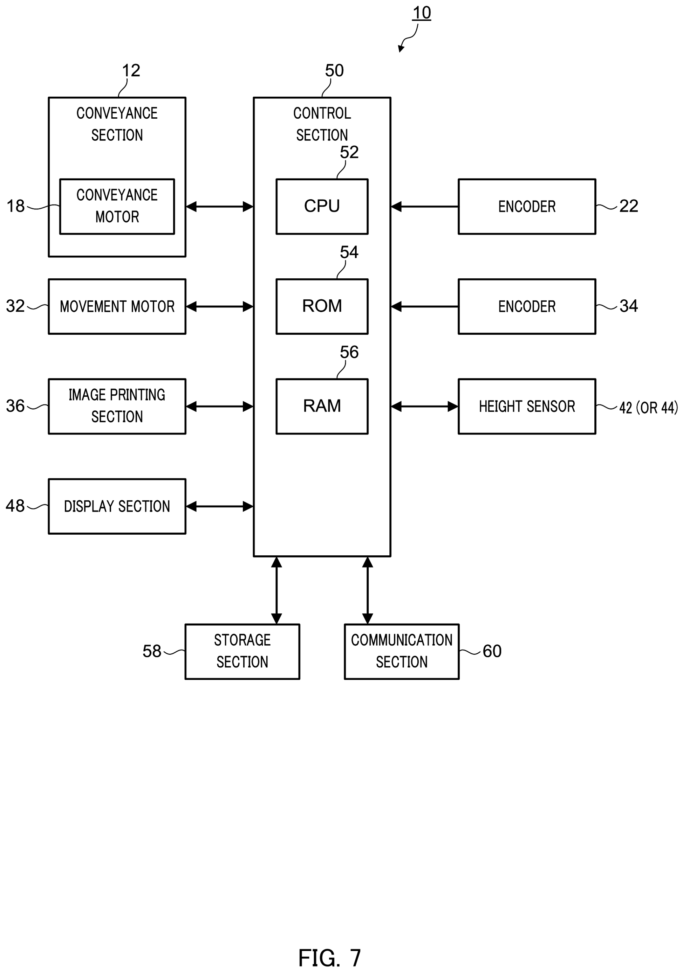

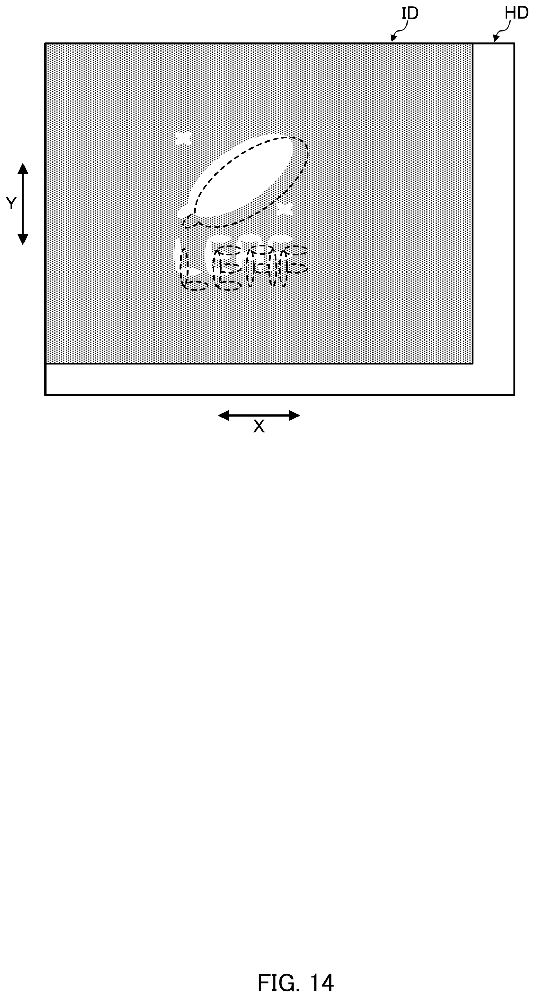

A display section 48 (see Fig. 7) that displays a graphic user interface (GUI) screen 46 (see Fig. 14) is provided in the vicinity of the gate-shaped frame 24. The display section 48 is constituted by, for example, a liquid crystal display (LCD) with a touch screen. The display section 48 includes various operation keys such as a numeric keypad and a start key, and displays various operation screens, states of images, operating statuses of respective functions, and the like.

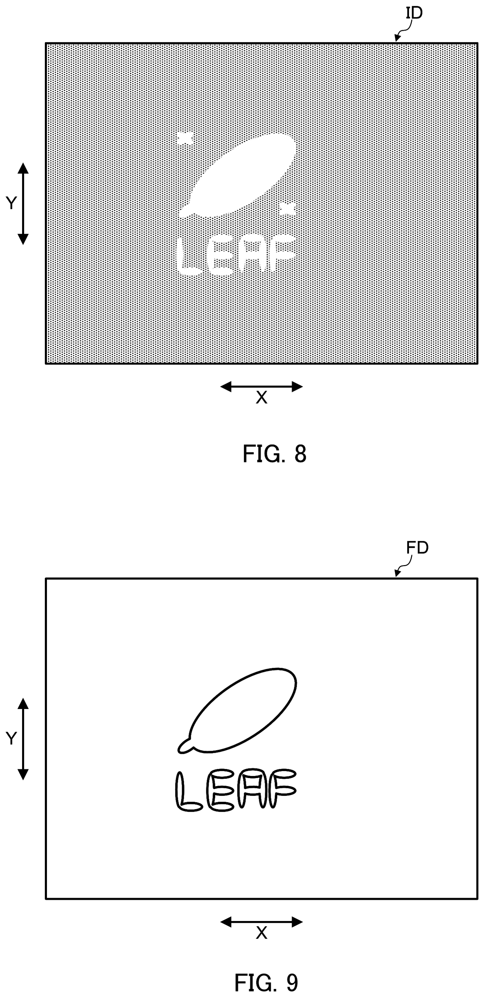

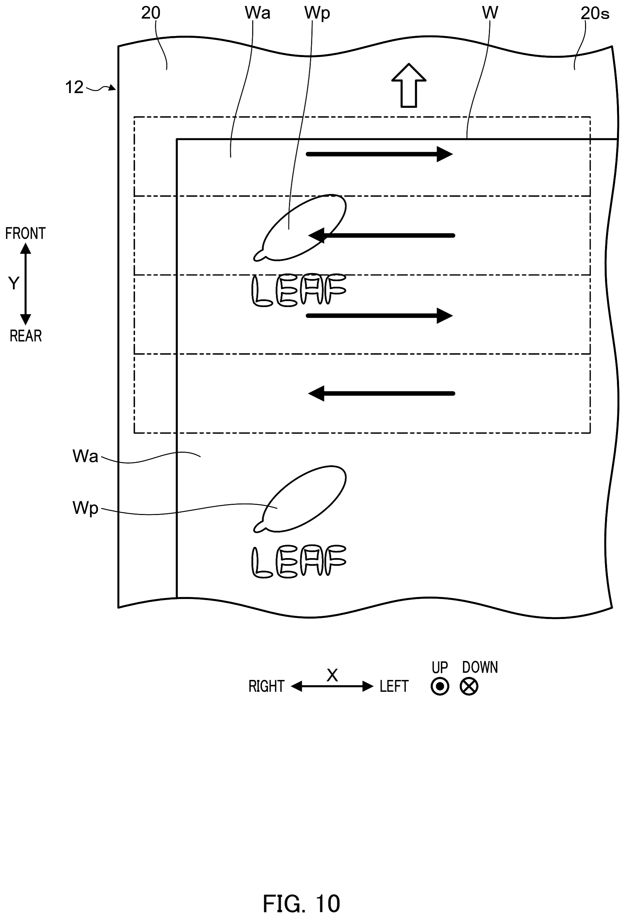

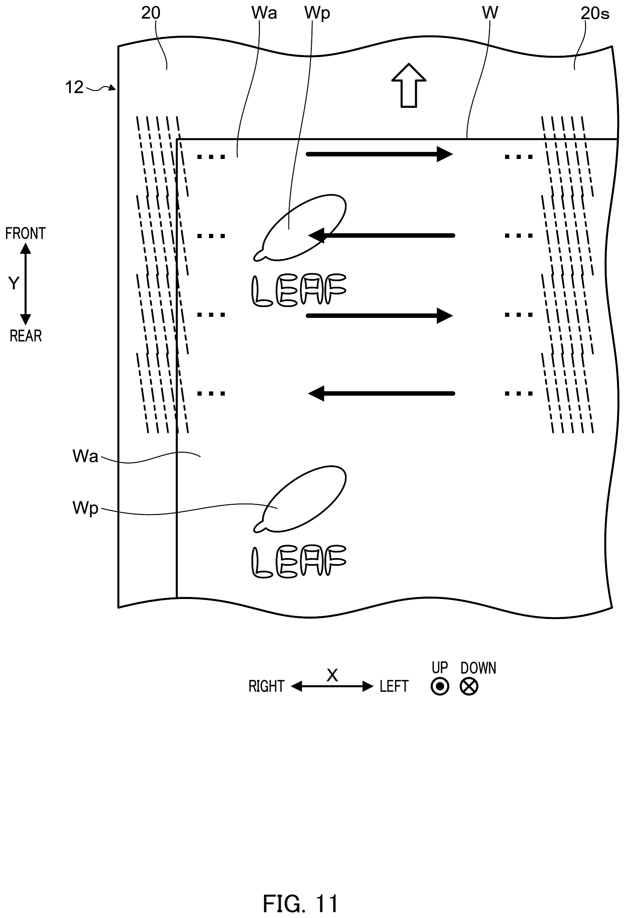

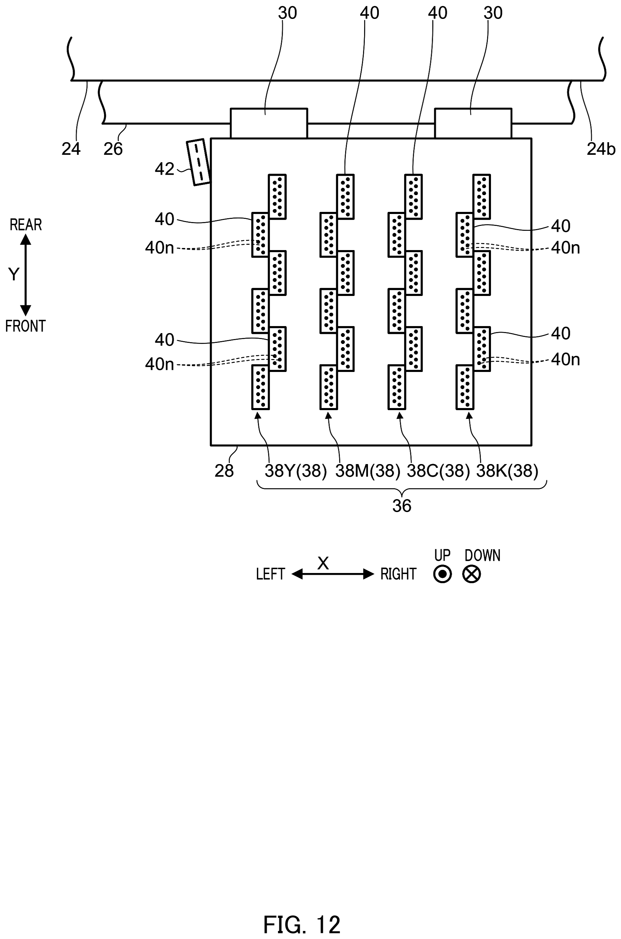

The control configuration of the inkjet recording apparatus 10 according to the present embodiment will be described with reference to Figs. 7 to 15. Fig. 7 is a control block diagram of the inkjet recording apparatus 10 according to the present embodiment. Fig. 8 is a schematic diagram illustrating image data ID of two-dimensional coordinates. Fig. 9 is a schematic diagram illustrating feature point data FD of the two-dimensional coordinates. Fig. 10 is a schematic plan diagram illustrating a measurement trajectory of the height sensor 42. Fig. 11 is a schematic plan diagram illustrating another measurement trajectory of the height sensor 42. Fig. 12 is a schematic plan diagram illustrating another aspect of the periphery of the carriage 28 including the image printing section 36 and the height sensor 42.

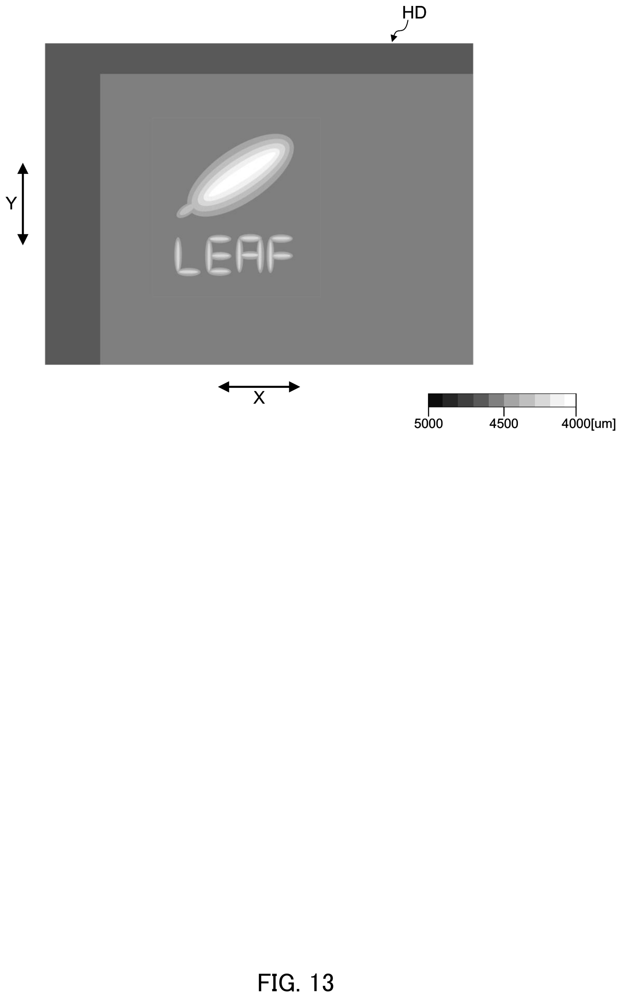

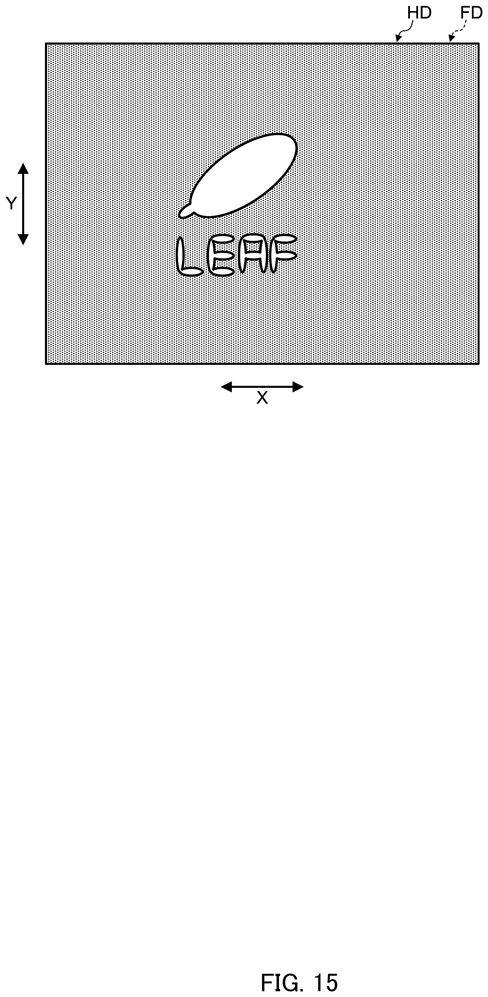

Fig. 13 is a schematic diagram illustrating height data HD of the two-dimensional coordinates. Fig. 14 is a schematic diagram illustrating how the image data ID of the two-dimensional coordinates and the height data HD of the two-dimensional coordinates are superimposed and displayed on the GUI screen 46. Fig. 15 is a schematic diagram illustrating how the positions of feature points of the feature point data FD are caused to match the positions of feature points of the height data HD.

As illustrated in Fig. 7, the inkjet recording apparatus 10 includes a control section 50 that controls the conveyance section 12 (the conveyance motor 18), the movement motor 32, the image printing section 36, the display section 48, and the like. The encoders 22 and 34 and the height sensor 42 or the like are connected to the control section 50. The control section 50 includes a central processing unit (CPU) 52, a read only memory (ROM) 54, and a random access memory (RAM) 56. A storage section 58 and a communication section 60 are connected to the control section 50.

The CPU 52 comprehensively controls the overall operation of the inkjet recording apparatus 10. The CPU 52 reads various control programs and setting data stored in the ROM 54, stores the read various control programs and setting data in the RAM 56, and executes the programs to perform various kinds of arithmetic processing. In addition, the RAM 56 provides a working memory space to the CPU 52 and stores temporary data. The RAM 56 may include a non-volatile memory.

As illustrated in Fig. 7, the CPU 52 refers to various kinds of data stored in the storage section 58 when performing various kinds of arithmetic processing. The storage section 58 is constituted by, for example, a non-volatile semiconductor memory or a hard disk drive. The storage section 58 stores image data ID (see Fig. 8) of two-dimensional coordinates for printing an image (color image) in the image printing region Wa of the fabric W, feature point data FD (see Fig. 9) of the two-dimensional coordinates indicating feature points of the three-dimensional pattern Wp in the image printing region Wa of the fabric W, and the like.

The CPU 52 transmits and receives various kinds of data to and from an external apparatus (for example, a personal computer) connected to a network such as a local area network (LAN) or a wide area network (WAN) via the communication section 60. For example, the CPU 52 receives, via the communication section 60, a print job transmitted from the external apparatus. The communication section 60 is constituted by a communication control card such as a LAN card.

As illustrated in Fig. 7, the control section 50 monitors the detection result of the encoder 22, the detection result of the encoder 34, and the measurement result of the height sensor 42 or the like. In addition, the control section 50 has functions as the operation control section, the height data generation section, and the image data correction section recited in the claims to be described later by executing various control programs. Then, the configuration of each function of the control section 50 is as follows.

As illustrated in Figs. 7 and 10, the control section 50 as the operation control section controls the operations of the movement motor 32 and the height sensor 42 or the like such that the height sensor 42 or the like continuously measure the height of the image printing region Wa of the fabric W while moving in the X direction. The control section 50 controls the operations of the movement motor 32 and the height sensor 42 or the like while monitoring the detection result of the encoder 34 or the like. The control section 50 controls the operation of the movement motor 32, the height sensor 42 or the like, and the conveyance motor 18 such that the measurement of the height of the image printing region Wa of the fabric W and the conveyance of the fabric W by a predetermined distance are alternately repeated. The predetermined distance refers to a distance corresponding to the measurement width of the height sensor 42 or the like in the Y direction, and is the same distance as the measurement width of the height sensor 42 or the like in the Y direction or is a distance slightly shorter than the measurement width of the height sensor 42 or the like in the Y direction.

That is, the control section 50 as the operation control section controls the operations of the movement motor 32, the height sensor 42 or the like, and the conveyance motor 18 such that the height sensor 42 or the like measures the height of the image printing region Wa in its entirety of the fabric W. Note that, the control section 50 may control the operations of the movement motor 32 and the height sensor 42 or the like such that the height sensor 42 measures the height of the image printing region Wa of the fabric W only when the height sensor 42 moves to one side in the X direction.

As illustrated in Figs. 7, 11, and 12, the control section 50 as the operation control section may control the operations of the movement motor 32 and the height sensor 42 such that the height sensor 42 intermittently measures the height of the image printing region Wa of the fabric W while moving in the X direction. In this case, the height sensor 42 is disposed along a direction inclined in the Y direction, and emits a laser beam (an example of light) LB having a band shape in the direction inclined in the Y direction. The measurement interval (measurement cycle) of the height sensor 42 is set such that the position of one end of a preceding measurement trajectory and the position of the other end of the subsequent measurement trajectory in the height sensor 42 overlap in the X direction.

As illustrated in Figs. 7 and 13, the control section 50 as the data generation section generates the height data HD of the two-dimensional coordinates based on the measurement result of the height sensor 42 or the like and the detection results of the encoders 22 and 34 during the measurement of the height of the image printing region Wa of the fabric W. The height data HD of the two-dimensional coordinates refers to data indicating the height of the image printing region Wa of the fabric W with respect to the conveyance surface 20s of the conveyance section 12, and the height of the image printing region Wa of the fabric W is expressed by, for example, brightness.

As illustrated in Fig. 7, the control section 50 as the image data correction section enlarges or reduces the image data ID (see Fig. 13) in the X direction and/or the Y direction so as to cause the positions of feature points, such as edges, of the image data ID (see Fig. 8) to match the positions of feature points, such as edges, of the height data HD. Specifically, the control section 50 enlarges or reduces the image data ID in the X direction and/or the Y direction by the following two control methods.

As illustrated in Figs. 7 and 14, in the first control method, the control section 50 causes the display section 48 to display the GUI screen 46, and causes the image data of the two-dimensional coordinates and the height data HD of the two-dimensional coordinates to be superimposed and displayed on the GUI screen 46. Then, the control section 50 enlarges or reduces the image data ID in the X direction and/or the Y direction by being operated by the user using a mouse (not illustrated) or the like such that the positions of feature points of the image data ID match the positions of feature points of the height data HD on the GUI screen 46.

As illustrated in Figs. 7 and 15, in the second control method, the control section 50 enlarges or reduces the feature point data FD in the X direction and/or the Y direction such that the positions of feature points of the feature point data FD stored in the storage section 58 match the positions of feature points of the height data HD. The control section 50 enlarges or reduces the image data ID in the X direction and/or the Y direction at an enlargement and reduction rate identical to an enlargement and reduction rate for the feature point data FD. In other words, the control section 50 enlarges or reduces the image data ID in the X direction and/or the Y direction such that the positions of feature points of the image data ID match the positions of feature points of the height data HD via the feature point data FD.

Note that, in the present embodiment, it is assumed that the fabric W supported on the conveyance surface 20s of the conveyance section 12 is enlarged or reduced constantly and that there is no or negligible internal distortion of the fabric W. For this reason, the positions of feature points of the image data ID can be caused to match the positions of feature points of the height data HD simply by enlarging or reducing the image data ID in the X direction and/or the Y direction.

The control section 50 as the operation control section controls the operation of the image printing section 36 based on the enlarged or reduced image data ID such that the image printing section 36 prints an image, which has been caused to match the three-dimensional pattern Wp, in the image printing region Wa of the fabric W. The control section 50 controls the operations of the conveyance motor 18 and the movement motor 32 while monitoring the detection result of the encoder 34 or the like during printing of an image in the image printing region Wa of the fabric W. The control section 50 repeatedly controls the operations of the image printing section 36, the conveyance motor 18, and the movement motor 32 while monitoring the detection result of the encoder 34 or the like such that an image which has been caused to match the three-dimensional pattern Wp is printed in the plurality of image printing regions Wa of the fabric W.

With the above-described configuration, the control section 50 as the operation control section controls the operations of the conveyance motor 18 and the like, thereby causing the leading end of the fabric W to be located immediately below or in the vicinity of the height sensor 42. Next, the control section 50 as the operation control section controls the operations of the movement motor 32, the height sensor 42 or the like, and the conveyance motor 18, thereby causing the measurement of the height of the image printing region Wa of the fabric W and the conveyance of the fabric W by a predetermined distance to be alternately repeated. Then, the control section 50 as the data generation section generates the height data HD based on the measurement result of the height sensor 42 or the like, and the like. Further, the control section 50 as the image data correction section enlarges or reduces the image data ID in the X direction and/or the Y direction so as to cause the positions of feature points of the image data ID to match the positions of feature points of the height data HD.

Thereafter, the control section 50 as the operation control section controls the operations of the conveyance motor 18 and the like to cause the fabric W to be reverse-conveyed (the conveyance in the direction opposite to the conveyance direction) once to cause the leading end of the fabric W to be located immediately below or in the vicinity of the image printing section 36. Then, the control section 50 as the operation control section controls the operation of the image printing section 36 based on the enlarged or reduced image data ID, thereby causing an image, which has been caused to match the three-dimensional pattern Wp, to be printed in the image printing region Wa of the fabric W. Further, the control section 50 as the operation control section repeatedly controls the operations of the image printing section 36, the conveyance motor 18, and the movement motor 32 while monitoring the detection result of the encoder 34 or the like, thereby causing an image to be printed in the plurality of image printing regions Wa of the fabric W.

Incidentally, since the enlargement or reduction of the image data ID is performed in units of pixels, a fraction of less than one pixel occurs as an error when the image data ID is enlarged or reduced. In addition, the conveyance distance of the fabric W may become equal to or longer than 100 m, and in a case where an image is printed in a large number of image printing regions Wa arranged along the Y direction, accumulated errors due to the enlargement and reduction of the image data ID cannot be ignored. For this reason, it is desirable that the control section 50 should have the following configuration.

As illustrated in Figs. 2 and 7, the control section 50 as the operation control section controls the operations of the movement motor 32, the height sensor 42 or the like, and the conveyance motor 18 such that the height sensor 42 or the like measures the height of a predetermined other image printing region Wa in its entirety. The control section 50 generates other height data (not illustrated) of the two-dimensional coordinates based on the measurement result of the height sensor 42 or the like and the detection results of the encoders 22 and 34 during the measurement of the height of the predetermined other image printing region Wa of the fabric W. The predetermined other image printing region Wa refers to another image printing region Wa located (adjacent) on the downstream side of an image printing region Wa in which an image has already been printed.

The control section 50 as the image data correction section calculates a difference in the Y direction (the conveyance direction) of the other height data with respect to the enlarged or reduced image data ID. In a case where the difference in the Y direction of the other height data is larger than half a pixel, the control section 50 enlarges the line data of the last one pixel in the Y direction in the enlarged or reduced image data ID to line data of two pixels. In a case where the difference in the Y direction of the other height data is larger than half a pixel on the minus side, the control section 50 deletes the line data of the last one pixel in the Y direction in the enlarged or reduced image data ID. That is, the control section 50 as the image data correction section adjusts the enlarged or reduced image data ID such that the difference in the Y direction of the other height data falls within an allowable range of half a pixel.

According to the configuration of the inkjet recording apparatus 10 according to the present embodiment, the height sensor 42 or the like measures the height of the image printing region Wa of the fabric W with respect to the conveyance surface 20s of the conveyance section 12 as described above. The control section 50 generates the height data HD of the two-dimensional coordinates based on the measurement result of the height sensor 42 or the like, and the like. The control section 50 enlarges or reduces the image data ID in the X direction and/or the Y direction so as to cause the positions of feature points of the image data ID to match the positions of feature points of the height data HD. For this reason, the control section 50 is capable of correcting the image data ID such that an image which has been caused to match the three-dimensional pattern Wp can be printed not based on imaging data generated by a camera, but based on the height data HD of the two-dimensional coordinates.

Accordingly, the inkjet recording apparatus 10 of the present embodiment makes it possible to easily recognize the shape (positions) of a three-dimensional pattern Wp, which has been formed in the image printing region Wa of the fabric W, from the height data HD even when the three-dimensional pattern Wp is in the same color as the material of the fabric W. As a result, an image (color image) which has been caused to match the three-dimensional pattern Wp can be easily printed in the image printing region Wa of the fabric W.

In addition, according to the configuration of the inkjet recording apparatus 10 according to the present embodiment, the control section 50 controls the operations of the movement motor 32 and the height sensor 42 or the like such that the height sensor 42 or the like measures the height of the image printing region Wa of the fabric W while moving in the X direction. The control section 50 controls the operations of the movement motor 32, the height sensor 42 or the like, and the conveyance motor 18 such that the measurement of the height of the image printing region Wa of the fabric W and the conveyance of the fabric W by a predetermined distance are alternately repeated. The control section 50 generates the height data HD of the two-dimensional coordinates based on the measurement result of the height sensor 42 or the like, and the like. For this reason, the height data HD of the two-dimensional coordinates can be accurately generated by the height sensor 42 or the like continuously measuring the height of the image printing region Wa of the fabric W while moving in the X direction.

Accordingly, the inkjet recording apparatus 10 of the present embodiment makes it possible to print an image, which has been caused to match the three-dimensional pattern Wp, in the image printing region Wp of the fabric W with high accuracy.

In addition, according to the configuration of the inkjet recording apparatus 10 according to the present embodiment, the control section 50 controls the operations of the movement motor 32 and the height sensor 42 such that the height sensor 42 intermittently measures the height of the image printing region Wa of the fabric W while moving in the X direction. For this reason, it is possible to shorten the measurement time of the height of the image printing region Wa of the fabric W.

Accordingly, the inkjet recording apparatus 10 of the present embodiment makes it possible to increase the speed of a series of processing from the start of the processing of measuring the height of the image printing region Wa of the fabric W to the end of the processing of enlarging or reducing the image data ID.

In addition, according to the configuration of the inkjet recording apparatus 10 according to the present embodiment, the control section 50 enlarges or reduces the image data ID by being operated by the user such that the positions of the image data ID match the positions of the height data HD on the GUI screen 46. For this reason, the processing of enlarging or reducing the image data ID by the control section 50 can be simplified.

Accordingly, the inkjet recording apparatus 10 of the present embodiment makes it possible to increase the speed of a series of processing from the start of the processing of measuring the height of the image printing region Wa of the fabric W to the end of the processing of enlarging or reducing the image data ID.

In addition, according to the configuration of the inkjet recording apparatus 10 according to the present embodiment, the control section 50 enlarges or reduces the image data ID such that the positions of feature points of the image data ID match the positions of feature points of the height data HD via the feature point data FD. For this reason, it is possible to make the processing of enlarging or reducing the image data ID by the control section 50 efficient.

Accordingly, the inkjet recording apparatus 10 of the present embodiment makes it possible to increase the speed of a series of processing from the start of the processing of measuring the height of the image printing region Wa of the fabric W to the end of the processing of enlarging or reducing the image data ID.

In addition, according to the configuration of the inkjet recording apparatus 10 according to the present embodiment, the plurality of height sensors 42 is arranged along the Y direction in the carriage 28. For this reason, the distance corresponding to the measurement width of the height sensor 42 in the Y direction can be increased by the number of height sensors 42, and the measurement time of the height of the image printing region Wa of the fabric W can be shortened.

Accordingly, the inkjet recording apparatus 10 of the present embodiment makes it possible to increase the speed of a series of processing from the start of the processing of measuring the height of the image printing region Wa of the fabric W to the end of the processing of enlarging or reducing the image data ID.

In addition, according to the configuration of the inkjet recording apparatus 10 according to the present embodiment, the height sensor 44 having a rectangular measurement range can be used instead of the height sensor 42. For this reason, in this case, it is possible to shorten the measurement time of the height of the image printing region Wa of the fabric W by sufficiently securing the measurement range of the height sensor 44.

Accordingly, the inkjet recording apparatus 10 of the present embodiment makes it possible to increase the speed of a series of processing from the start of the processing of measuring the height of the image printing region Wa of the fabric W to the end of the processing of enlarging or reducing the image data ID.

In addition, according to the configuration of the inkjet recording apparatus 10 according to the present embodiment, the control section 50 generates the other height data based on the measurement result of the height sensor 42 or the like and the detection results of the encoders 22 and 34 during the measurement of the height of the predetermined other image printing region Wa of the fabric W. The control section 50 adjusts the enlarged or reduced image data ID such that the difference in the Y direction of the other height data falls within the allowable range. For this reason, in a case where an image is printed in a large number of image printing regions Wa arranged along the Y direction, it is possible to prevent an error accompanied by the enlargement or reduction of the image data ID from exceeding the allowable range.

Accordingly, even in a case where an image is printed in a large number of image printing regions Wa arranged along the Y direction, the inkjet recording apparatus 10 of the present embodiment makes it possible to suppress variations in the image quality.

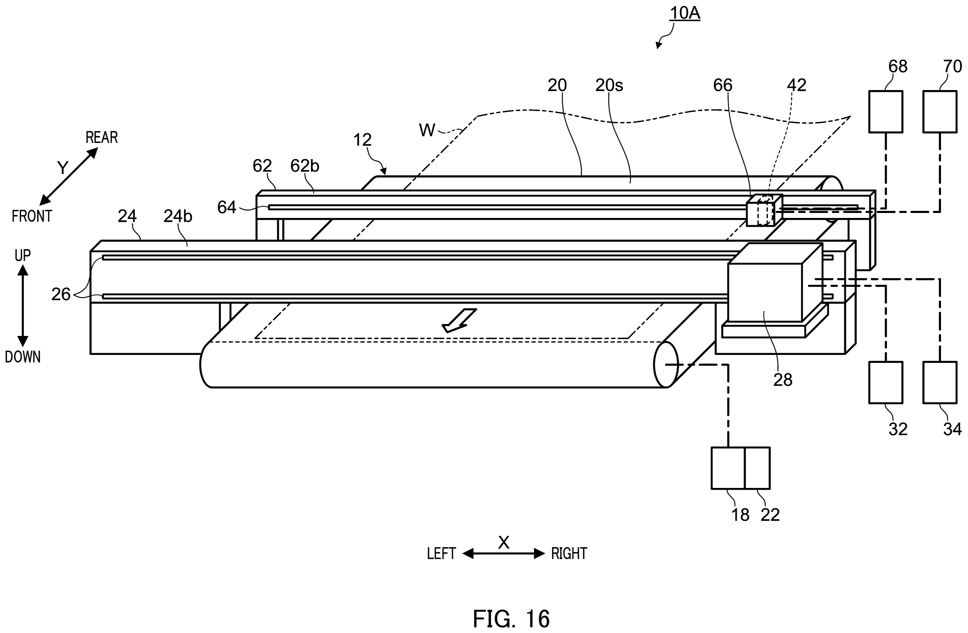

The configuration of an inkjet recording apparatus 10A according to Variation 1 of the present embodiment will be described with reference to Fig. 16. Fig. 16 is a schematic perspective view of the inkjet recording apparatus 10A according to Variation 1 of the present embodiment.

As illustrated in Fig. 16, the inkjet recording apparatus 10A according to Variation 1 of the present embodiment has the same configuration as the inkjet recording apparatus 10 (see Fig. 1) according to the present embodiment. In the configuration of the inkjet recording apparatus 10A according to Variation 1 of the present embodiment, points different from those in the configuration of the inkjet recording apparatus 10 according to the present embodiment will be described. Note that, for convenience of description, members having the same functions as those described in the present embodiment are denoted by the same reference signs, and descriptions thereof will not be repeated.

The inkjet recording apparatus 10A is provided with a second gate-shaped frame 62 which is installed so as to straddle the conveyance section 12, and the second gate-shaped frame 62 is disposed on the downstream side of the image printing section 36 (the gate-shaped frame 24). The second gate-shaped frame 62 includes a support portion 62b extending in the X direction, and the support portion 62b is located above the conveyance surface 20s of the conveyance section 12. A linear guide 64 extending in the X direction is provided at the support portion 62b of the second gate-shaped frame 62.

At the linear guide 64, a second carriage 66 is supported so as to be movable in the X direction (the main scanning direction) via a plurality of slide members (not illustrated). In other words, the second carriage 66 is provided at the support portion 62b of the second gate-shaped frame 62 so as to be movable in the X direction via the linear guide 64 or the like. In further other words, the second carriage 66 is provided on the downstream side of the image printing section 36 above (on the side above) the conveyance surface 20s of the conveyance section 12 so as to be movable in the X direction via the support portion 62b of the second gate-shaped frame 62, or the like. In addition, the second carriage 66 moves in the X direction by the driving of a second movement motor 68 such as a linear motor. An encoder 70 that detects the position of the second carriage 66 in the X direction is provided at an appropriate position of the second carriage 66.

In the inkjet recording apparatus 10A, the height sensor 42 is provided not at a side portion of the carriage 28, but at an appropriate position of the second carriage 66. In other words, the height sensor 42 is provided on the downstream side of the image printing section 36 above (on the side above) the conveyance surface 20s of the conveyance section 12 so as to be movable in the X direction via the second carriage 66 and the support portion 62b of the second gate-shaped frame 62. The height sensor 42 moves integrally with the second carriage 66 in the X direction.

Here, the second movement motor 68 such as the linear motor corresponds to a movement section that moves the height sensor 42 in the X direction (the main scanning direction). The encoder 70 corresponds to a position detection section that detects the position of the height sensor 42 in the X direction.

Although illustration is omitted, even in the inkjet recording apparatus 10A, the control section 50 (see Fig. 7) controls the second movement motor 68, and the encoder 70 is connected to the control section 50. In addition, the control section 50 has the functions as the operation control section, the height data generation section, and the image data correction section as described above.

According to the configuration of the inkjet recording apparatus 10A according to Variation 1 of the present embodiment, the height sensor 42 is provided on the downstream side of the image printing section 36 above the conveyance surface 20s of the conveyance section 12 so as to be movable in the X direction. For this reason, after the height sensor 42 measures the height of the image printing region Wa of the fabric W, the image printing section 36 can print an image in the image printing region Wa of the fabric W without causing the conveyance section 12 to reverse-convey the fabric W. In addition, the height sensor 42 can measure the height of the image printing region Wa of the fabric W during the printing of an image by the image printing section 36.

Accordingly, the inkjet recording apparatus 10A of Variation 1 of the present embodiment makes it possible to improve the convenience of the inkjet recording apparatus 10A.

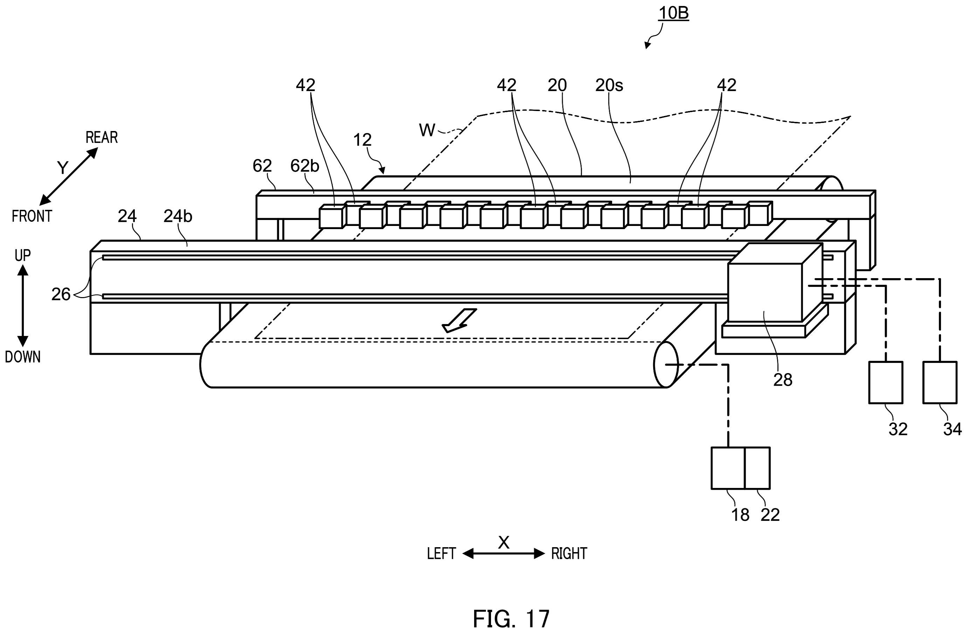

The configuration of an inkjet recording apparatus 10B according to Variation 2 of the present embodiment will be described with reference to Fig. 17. Fig. 17 is a schematic perspective view of the inkjet recording apparatus 10B according to Variation 2 of the present embodiment.

As illustrated in Fig. 17, the inkjet recording apparatus 10B according to Variation 2 of the present embodiment has the same configuration as the inkjet recording apparatus 10A according to Variation 1 of the present embodiment (see Fig. 16). In the configuration of the inkjet recording apparatus 10B according to Variation 2 of the present embodiment, points different from those in the configuration of the inkjet recording apparatus 10A according to Variation 1 of the present embodiment will be described. Note that, for convenience of description, members having the same functions as those described in Variation 1 of the present embodiment are denoted by the same reference signs, and descriptions thereof will not be repeated.

In the inkjet recording apparatus 10B, the linear guide 64, the second carriage 66, the second movement motor 68, and the encoder 70 (see Fig. 9) are omitted. In addition, a plurality of the height sensors 42 is provided at the support portion 62b of the second gate-shaped frame 62. In other words, the plurality of height sensors 42 is provided on the downstream side of the image printing section 36 above (on the side above) the conveyance surface 20s of the conveyance section 12. The plurality of height sensors 42 is arranged in a staggered manner along the X direction.

Although illustration is omitted, even in the inkjet recording apparatus 10B, the control section 50 (see Fig. 7) has the functions as the operation control section, the height data generation section, and the image data correction section as described above.

According to the configuration of the inkjet recording apparatus 10B according to Variation 2 of the present embodiment, the plurality of height sensors 42 is provided on the downstream side of the image printing section 36 above the conveyance surface 20s of the conveyance section 12, and is arranged along the X direction. For this reason, the height of the image printing region Wa of the fabric W can be measured without moving the height sensor 42 in the X direction. In addition, after the height of the image printing region Wa of the fabric W is measured, the image printing section 36 can print an image in the image printing region Wa of the fabric W without causing the conveyance section 12 to reverse-convey the fabric W. Further, the plurality of height sensors 42 can measure the height of the image printing region Wa of the fabric W during the printing of an image by the image printing section 36.

Accordingly, the inkjet recording apparatus 10B of Variation 2 of the present embodiment makes it possible to improve the convenience of the inkjet recording apparatus 10B.

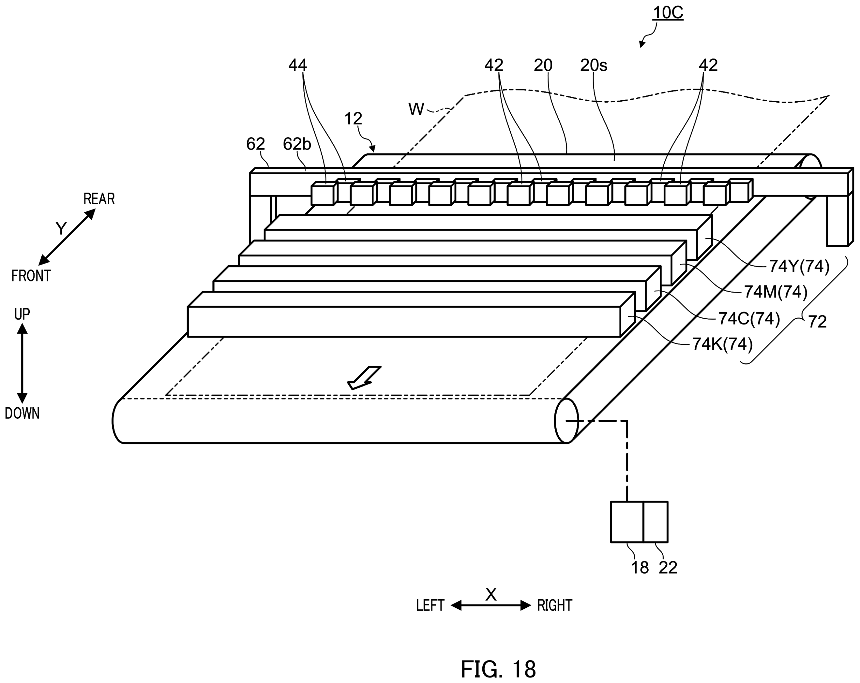

The configuration of an inkjet recording apparatus 10C according to Variation 3 of the present embodiment will is described with reference to Fig. 18. Fig. 18 is a schematic perspective view of the inkjet recording apparatus 10C according to Variation 3 of the present embodiment.

As illustrated in Fig. 18, the inkjet recording apparatus 10C according to Variation 3 of the present embodiment has the same configuration as the inkjet recording apparatus 10B according to Variation 2 of the present embodiment (see Fig. 17). In the configuration of the inkjet recording apparatus 10B according to Variation 3 of the present embodiment, points different from those in the configuration of the inkjet recording apparatus 10B according to Variation 2 of the present embodiment will be described. Note that, for convenience of description, members having the same functions as those described in Variation 2 of the present embodiment are denoted by the same reference signs, and description thereof will not be repeated.

In the inkjet recording apparatus 10C, the gate-shaped frame 24, the linear guide 26, the carriage 28, the movement motor 32, the encoder 34, and the image printing section 36 (see Fig. 17) are omitted. In addition, an image printing section 72 that prints an image (color image) on the fabric W in one pass is provided above (on the side above) the conveyance surface 20s of the conveyance section 12. The image printing section 72 includes a plurality of head units 74 (74Y, 74M, 74C, and 74K) that forms an image in one pass by discharging ink onto a plurality of image printing regions Wa of the fabric W. The plurality of head units 74 (74Y, 74M, 74C, and 74K) corresponds to inks of four colors of yellow (Y), magenta (M), cyan (C), and black (K). The plurality of head units 74 (74Y, 74M, 74C, and 74K) is arranged at intervals in the Y direction, and each of the head units 74 extends in the X direction (the main scanning direction).

Each of the head units 74 includes a plurality of inkjet heads (not illustrated) that discharges ink onto the fabric W, and the plurality of inkjet heads 40 is arranged in a staggered manner along the Y direction. A plurality of nozzles (not illustrated) for discharging ink is formed at the leading end portion of each inkjet head of each of the head units 74. Each of the head units 74 may be configured to be movable in the main scanning direction via a carriage (not illustrated).

Although illustration is omitted, even in the inkjet recording apparatus 10C, the control section 50 (see Fig. 7) controls the image printing section 72. In addition, the control section 50 has the functions as the operation control section, the height data generation section, and the image data correction section as described above.

According to the configuration of the inkjet recording apparatus 10C according to Variation 3 of the present embodiment, the image printing section 72 prints an image on the fabric W in one pass. For this reason, high-speed printing can be performed by the image printing section 72 without moving the image printing section 72 in the X direction.

In the same manner as in the configuration of the inkjet recording apparatus 10B (see Fig. 17) according to Variation 2 of the present embodiment, it is possible to measure the height of the image printing region Wa of the fabric W without moving the height sensor 42 in the X direction. In addition, after the height of the image printing region Wa of the fabric W is measured, the image printing section 72 can print an image in the image printing region Wa of the fabric W without causing the conveyance section 12 to reverse-convey the fabric W. Further, the plurality of height sensors 42 can measure the height of the image printing region Wa of the fabric W during the printing of an image by the image printing section 72.

Accordingly, the inkjet recording apparatus 10C of Variation 3 of the present embodiment makes it possible to improve the convenience of the inkjet recording apparatus 10C.

Although embodiments of the present invention have been described and illustrated in detail, the disclosed embodiments are made for purpose of illustration and example only and not limitation. The scope of the present invention should be interpreted by terms of the appended claims.

### Industrial Applicability

The present invention is useful as an inkjet recording apparatus that is capable of easily printing an image caused to match a three-dimensional pattern, which has been formed in an image printing region of a medium, in the image printing region even when the three-dimensional pattern is in the same color as the material of the medium.

### REFERENCE SIGNS LIST

10 Inkjet recording apparatus
12 Conveyance section
14 Conveyance roller
16 Conveyance roller
18 Conveyance motor
20 Conveyance belt
20s Conveyance surface
22 Encoder
24 Gate-shaped frame
24b Support portion
26 Linear guide
28 Carriage
30 Slide member
32 Movement motor
34 Encoder
36 Image printing section
38 Head unit
38Y Head unit
38M Head unit
38C Head unit
38K Head unit
40 Inkjet head
40n Nozzle
42 Height sensor
44 Height sensor
46 GUI screen
48 Display section
50 Control section
52 CPU
54 ROM
56 RAM
58 Storage section
60 Communication section
10A Inkjet recording apparatus
62 Second gate-shaped frame
62b Support portion
64 Linear guide
66 Second carriage
68 Second movement motor
70 Encoder
10B Inkjet recording apparatus
10C Inkjet recording apparatus
72 Image printing section
74 Head unit
74M Head unit
74Y Head unit
74C Head unit
74K Head unit
ID Image data
FD Feature point data
HD Height data
LB Laser beam (light)
W Fabric (medium)
Wan Image printing region
Wp Three-dimensional pattern

## Claims

1. An inkjet recording apparatus (10, 10A, 10B, 10C), comprising:
a conveyance section (12) that conveys, in a conveyance direction, a medium on which a three-dimensional pattern is formed in an image printing region;
an image printing section (36) that is provided above a conveyance surface of the conveyance section and prints an image in the image printing region;
a height measurement section (42) that measures a height of the image printing region with respect to the conveyance surface;
a height data generation section (50) that generates height data of two-dimensional coordinates indicating the height of the image printing region, based on a measurement result of the height measurement section; and
an image data correction section (50) that enlarges or reduces the image data so as to cause a position of the image data of the two-dimensional coordinates for forming the image in the image printing region to match a position of the height data.

2. The inkjet recording apparatus according to claim 1, further comprising an operation control section (50) that controls an operation of the height measurement section and controls, based on the image data enlarged or reduced by the image data correction section, an operation of the image printing section, wherein the operation control section controls the operation of the height measurement section such that the height measurement section measures the height of the image printing region, and wherein the operation control section controls the operation of the image printing section such that the image printing section prints the image in the image printing region, the image having been caused to match the three-dimensional pattern.

3. The inkjet recording apparatus according to claim 2, wherein:
the height measurement section is provided above the conveyance surface so as to be movable in a main scanning direction orthogonal to the conveyance direction, and
the inkjet recording apparatus further comprises:
a distance detection section (22) that detects a conveyance distance of the medium conveyed by the conveyance section;
a movement section (32, 68) that moves the height measurement section in the main scanning direction; and
a position detection section (34) that detects a position of the height measurement section in the main scanning direction,
the operation control section controls operations of the movement section and the height measurement section and controls operations of the movement section, the height measurement section, and the conveyance section, wherein the operation control section controls the operations of the movement section and the height measurement section such that the height measurement section measures the height of the image printing region while moving in the main scanning direction, and wherein the operation control section controls the operations of the movement section, the height measurement section, and the conveyance section such that measurement of the height of the image printing region and conveyance of the medium by a distance corresponding to a measurement width of the height measurement section are alternately repeated, and
the height data generation section generates the height data based on the measurement result of the height measurement section, a detection result of the distance detection section, and a detection result of the position detection section.

4. The inkjet recording apparatus according to claim 3, wherein
the operation control section controls the operations of the movement section and the height measurement section such that the height measurement section continuously measures the height of the image printing region while moving in the main scanning direction.

5. The inkjet recording apparatus according to claim 3, wherein
the operation control section controls the operations of the movement section and the height measurement section such that the height measurement section intermittently measures the height of the image printing region while moving in the main scanning direction.

6. The inkjet recording apparatus according to claim 1, further comprising a display section (48) that displays a graphic user interface (GUI) screen, wherein
the image data correction section enlarges or reduces the image data by being operated by a user such that the position of the image data matches the position of the height data on the GUI screen.

7. The inkjet recording apparatus according to claim 1, wherein
the image data correction section enlarges or reduces feature point data of two-dimensional coordinates indicating a feature point of the three-dimensional pattern in the image printing region and enlarges or reduces the image data at an enlargement and reduction rate identical to an enlargement and reduction rate for the feature point data, wherein the image data correction section enlarges or reduces the feature point data such that a position of the feature point data matches the position of the height data.

8. The inkjet recording apparatus according to claim 2, wherein:
the operation control section controls an operation of the height measurement section such that the height measurement section measures a height of another image printing region located on a downstream side of the image printing region in which the image has already been printed,
the height data generation section generates other height data of two-dimensional coordinates indicating the height of the other image printing region, based on the measurement result of the height measurement section, and
the image data correction section calculates a difference in the conveyance direction of the other height data with respect to the enlarged or reduced image data.

9. The inkjet recording apparatus according to claim 8, wherein
the image data correction section adjusts the enlarged or reduced image data such that the difference falls within an allowable range.

10. The inkjet recording apparatus according to claim 1, further comprising a carriage (28) provided above the conveyance surface so as to be movable in a main scanning direction orthogonal to the conveyance direction, wherein
each of the image printing section and the height measurement section is provided at the carriage and moves integrally with the carriage in the main scanning direction.

11. The inkjet recording apparatus according to claim 10, wherein
there is a plurality of the height measurement sections and the plurality of measurement sections is arranged in the carriage along the conveyance direction.

12. The inkjet recording apparatus according to claim 1, further comprising a carriage (28) provided above the conveyance surface so as to be movable in a main scanning direction orthogonal to the conveyance direction, wherein
the image printing section is provided at the carriage and moves integrally with the carriage in the main scanning direction, and
the height measurement section is provided on an upstream side of the image printing section above the conveyance surface so as to be movable in the main scanning direction.

13. The inkjet recording apparatus according to claim 1, further comprising a carriage (28) provided above the conveyance surface so as to be movable in a main scanning direction orthogonal to the conveyance direction, wherein
the image printing section is provided at the carriage and moves integrally with the carriage in the main scanning direction, and
there is a plurality of the height measurement sections and the plurality of height measurement sections is provided on an upstream side of the image printing section above the conveyance surface and is arranged along the main scanning direction.

14. The inkjet recording apparatus according to claim 1, wherein:
the image printing section prints the image on the medium in one pass, and
there is a plurality of the height measurement sections and the plurality of height measurement sections is provided on an upstream side of the image printing section above the conveyance surface and is arranged along the main scanning direction.

15. The inkjet recording apparatus according to claim 1, wherein
the height measurement section has a measurement range in a line shape or in a rectangular shape.
